Europäisches Patentamt

European Patent Office

Office européen des brevets

(11) Publication number: **0 137 134**
**B1**

# EUROPEAN PATENT SPECIFICATION

(45) Date of publication of patent specification: **10.05.89**    (51) Int. Cl.⁴: **G 11 B 5/60**

(21) Application number: **84107935.3**

(22) Date of filing: **06.07.84**

(54) A magnetic head having a non-magnetic substrate.

(30) Priority: **21.09.83 JP 174739/83**
**04.10.83 JP 185496/83**
**12.04.84 JP 73653/84**
**12.04.84 JP 73654/84**

(43) Date of publication of application:
**17.04.85 Bulletin 85/16**

(45) Publication of the grant of the patent:
**10.05.89 Bulletin 89/19**

(84) Designated Contracting States:
**DE GB NL**

(56) References cited:
**EP-A-0 019 693**
**EP-A-0 036 786**
**EP-A-0 142 781**
**DE-A-2 732 088**
**DE-B-2 002 510**
**JP-A-58 121 179**
**US-A-4 285 019**

(73) Proprietor: **HITACHI METALS, LTD.**
**1-2, Marunouchi 2-chome Chiyoda-ku**
**Tokyo 100 (JP)**

(72) Inventor: **Yamada, Hirohide**
**423-7 Hiramatsu-Honcho**
**Utsunomiya Tochigi (JP)**
Inventor: **Koike, Yoshiharu**
**Hitachi Wakyo-Ryo E-201 600 Jurokken**
**Kumagaya Saitama (JP)**

(74) Representative: **Strehl, Peter, Dipl.-Ing. et al**
**Patentanwälte Strehl Schübel-Hopf Groening**
**Schulz Maximilianstrasse 54 Postfach 22 14 55**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## EP 0 137 134 B1

**Description**

(1) Field of the Invention

This invention relates to (a) a magnetic head used in data processing technology, particularly magnetic disk files and (b) an appropriately selected material for non-magnetic substrates used for sliders of the magnetic heads, as defined in the preamble of claim 1.

(2) Description of the Prior Art

Magnetic heads used for magnetic disks ordinarily have a structure as disclosed, for example, in JP—A—57—569. In these floating type magnetic heads, a magnetic core made from a magnetic material of high permeability is fixed to the rear end portions of sliders each comprising a magnetic or non-magnetic substrate. On the lower sides of the sliders, the magnetic core has a gap for magnetic transduction. The magnetic core further has a winding for electromagnetic transduction, whereby a magnetic transducer is formed. A floating type magnetic head having such a structure is in light contact with a magnetic disk due to a spring action when the magnetic disk is in stop. When the magnetic disk is in rotation, the air around the surface of the magnetic disk makes a similar movement pushing up the lower sides of magnetic head sliders.

The transducer portion of magnetic head is made, in many cases, from a soft ferrite such as Mn—Zn ferrite or Ni—Zn ferrite. When the recording density of magnetic disk is increased, it is required that the width of magnetic core and the length of gap for magnetic transduction be made smaller, and at that time, the magnetic core is made from a magnetic thin film of permalloy or amorphous metal made by sputtering, etc. There are cases that one magnetic core is made from a soft ferrite and the other core from a magnetic thin film. When a thin film core is used, there are cases that a thin film of insulating material such as $Al_2O_3$ is applied on both the thin film magnetic core and sliders to obtain electrical insulation between a winding for the electromagnetic transduction and the thin film core or between coils for electromagnetic transduction. When non-magnetic slider substrates are made from a material of relatively low electrical resistance, there are cases that a thin film of insulating material is applied on sliders to obtain insulation between the sliders and the magnetic thin film core and thereon is formed a magnetic transducer.

Such a magnetic head does not contact with a magnetic disk when the magnetic disk is in rotation because the head is buoyant due to the flow of air. The magnetic head, however, comes in contact with the magnetic disk when the magnetic disk starts or stops rotation. For example, when the magnetic disk stops rotation, the magnetic head comes in contact with the magnetic disk as follows. As the magnetic disk reduces its rotation speed, the flow speed of the air around the surface of the magnetic disk becomes slow. When a buoyancy for the magnetic head is lost, the magnetic head hits the magnetic disk. As a reaction, the magnetic head jumps up and drops on the disk again. Such a movement is repeated many times (the magnetic head appears to be dragged on the magnetic disk) and there comes a final stop. Any magnetic head must be able to withstand a shock at the start or stop of magnetic disk and such an ability of a magnetic head is at times called CSS resistance property (CSS stands for contact-start-stop).

In order for a magnetic head to have a superior CSS resistance property, the slider portion of the magnetic head must have excellent slidability. Further, the slider portion must be flat and free from pores and have good wear resistance.

As described above, a magnetic head undergoes CSS and slides in contact with a magnetic disk. If triboelectricity is caused by friction at this time, a signal winding of a magnetic transducer may generate a noise or the height of magnetic head flotation may be altered. Hence, it is desirable that the slider portion of magnetic head be made from a material of less triboelectricity.

The slider portion of magnetic head has a very complex structure as shown, for example, in JP—A—55—163665. In order to produce a slider of such a structure at a high productivity, the material for slider must have good machinability. That is, the material must have at least a small cutting resistance and cause no clogging of cutting blade. Further, it is desirable that chipping of the slider material during machining be as little as possible. For this purpose, it is desirable that the slider material have crystal grain particles as small as possible.

Such a magnetic head as described above is disclosed in JP—A—55—163665 mentioned above. The slider of this magnetic head is made from a mixture of $Al_2O_3$ and TiC and the weight ratio of $Al_2O_3$ to TiC is in a range of 60:40 to 80:20. $Al_2O_3$—TiC ceramics have good machinability and, when machined into a complex form, seldom cause cracks or chipping. They are also excellent in wear resistance. However, these ceramics are poor in CSS resistance property which is the most important property when a ceramic is used for the slider of magnetic head, particularly in sliding characteristic. Since $Al_2O_3$ is high in electrical resistance, inclusion of TiC in a large amount as described in the above Japanese Patent Laid-open No. 55—163665 is necessary to reduce the electrical resistance of $Al_2O_3$.

JP—A—58 121179 discloses a magnetic head comprising a slider body formed of a non-magnetic zirconia ceramics substrate having good slidability and an electro-magnetic transducer disposed on the substrate and having a magnetic piece and a signal winding, the zirconia ceramics comprising a predominantly cubic zirconia matrix with $Y_2O_3$ as a stabilizer, especially 10, 20, 30 or 40 mol% of $Y_2O_3$.

EP—A—0142781 (application no. 84113479.4, priority date 11.11.83, publication date 29.05.85)

2

discloses a magnetic head slider assembly having a substrate of zirconia ceramics which may comprise $Y_2O_3$ in an amount of 6—11 mol%.

Summary of the Invention

An object of the present invention is to provide a magnetic head having a slider of excellent sliding characteristic. Further, this magnetic head is slight in triboelectricity and good in machinability.

The magnetic head according to the present invention comprises a slider body formed of a non-magnetic zirconia ceramics substrate having good slidability and an electro-magnetic transducer disposed on the substrate and having a magnetic piece and a signal winding, the zirconia ceramics comprising a predominantly cubic zirconia matrix with $Y_2O_3$ as a stabilizer, characterized in that the zirconia matrix contains five to 20 mol%, preferably 5 to 10 mol%, of $Y_2O_3$ and 0.5 to 30 vol% of fine carbide particles dispersed in the matrix, the carbide being a carbide of at least one metal selected from groups IVa, Va, and VIa of the periodic table, preferably titanium.

In the practice of the present invention, the magnetic transducer may comprise a magnetic core made from a thin film magnetic material, and an insulating thin film may be provided on both the magnetic core and a non-magnetic substrate or between the non-magnetic substrate and the magnetic core.

Description of the Preferred Embodiments

The zirconia ceramic used in the present invention comprises a matrix composed of a zirconia phase. It is preferable that this zirconia phase mainly be a stabilized zirconia phase, namely, cubic zirconia because cubic zirconia has excellent sliding characteristic. In order to make cubic zirconia stable even at room temperature, it is preferable that the zirconia phase contain 6 to 20 mol%, preferably 6 to 10 mol% of $Y_2O_3$ as a stabilizer.

In a preferred embodiment of the present invention, the amount of tetragonal zirconia contained in the zirconia phase is 5% or less. The amounts of tetragonal and cubic zirconias can be determined by the X-ray diffractometry.

Dispersion of fine particles of foreign ceramic materials in the zirconia ceramic enables prevention of growth of zirconia crystal particles and maintenance of these zirconia particles in very fine sizes. Appropriate fine particles of the foreign ceramic materials to be dispersed in the zirconia ceramic are those of alumina or those of a carbide of at least one element selected from Groups IVa, Va and VIa of the Periodic Table.

When alumina fine particles are added, 0.5 to 30% by volume, preferably 1.5 to 14% by volume (based on total ceramics) of them are uniformly dispersed in the zirconia ceramic.

When substrates are machined into a magnetic head slider shape which is shown in Japanese Patent Laid-open No. 55—163665, there tends to appear large chipping at the edge portion. However, it was found that when 0.5 to 30% by volume, preferably 1.5 to 14% by volume of $Al_2O_3$ is added to the zirconia ceramic, crystal grain particles of cubic zirconia can keep diameters as small as 5 to 10 µm and thereby the anti-chipping property of zirconia is improved. Further, $Al_2O_3$ accelerates sintering of zirconia as a sintering agent and, having a large hardness, enhances the anti-wear property of zirconia. When $Al_2O_3$ is added in an amount of 0.5% by volume or less, the effect of keeping zirconia crystal grain particles in fine sizes is lost. When $Al_2O_3$ is added in too large an amount, the resulting ceramic has a higher cutting resistance.

As the fine particles of a carbide of at least one element selected from Groups IVa, Va and VIa of the Periodic Table, those of TiC are preferable. These carbide fine particles are preferably added in an amount of 0.5 to 30% by volume.

It is also preferable that carbide fine particles and alumina fine particles be dispersed in the zirconia ceramic matrix composed of a zirconia phase. It is thought that dispersion of carbide fine particles (particularly TiC fine particles) and alumina fine particles in the zirconia phase serves to prevent growth of zirconia crystal grain particles and to keep these particles in very small sizes.

It is preferable that carbide fine particles and alumina fine particles be added each in an amount of 0.5 to 30% by volume relative to 40 to 90% by volume of zirconia phase. When the carbide is TiC, it follows that the ceramic matrix contains 0.4 to 26.3% by weight of TiC and 0.34 to 22.5% by weight of $Al_2O_3$ and the remainder is substantially a zirconia phase. As impurities in the matrix, ordinarily allowable amounts of $SiO_2$ and $Fe_2O_3$ may be present. It is preferable that $Fe_2O_3$ be reduced to 0.1% by weight or less. The amount of $SiO_2$ causes no problem if it is 5% by weight or less. It sometimes occurs that $Y_2O_3$, CaO, MgO, etc., which are thought to be present in the zirconia phase in the form of solid solution, separate out at places of the matrix to form dispersed particles or they combine or react with TiC or $Al_2O_3$ and the resulting fine particles disperse in the zirconia phase, however, these phenomena create no problem.

As described above, $Al_2O_3$ and TiC are preferably added each in an amount of 0.5 to 30% by volume. More preferably, they are each in an amount of 1 to 10% by volume when they are added together. As mentioned, both $Al_2O_3$ and TiC, when dispersed in a zirconia phase, prevent growth of zirconia crystal particles into larger sizes. Besides, the carbide, having a large hardness, prevents clogging of diamond blade in cutting operation of zirconia ceramic by serving like dressing.

For stabilization of zirconia phase, a stabilizer such as $Y_2O_3$, MgO, CaO or the like is added thereto. Zirconia containing no stabilizer is cubic (c phase) at high temperatures above 2,400°C, tetragonal (t phase) at a temperature range of 2,400° to 1,200°C, and monoclinic (m phase) at room temperature (lower than 1,200°C). When zirconia contains a very small amount of a stabilizer, zirconia is still in m phase at room temperature. When zirconia contains an increased amount of a stabilizer, t phase comes to be present at room temperature. When zirconia contains a further increased amount of a stabilizer, c phase comes to be present in addition to t phase. When the stabilizer is added in an amount exceeding a certain high level, only c phase is present at room temperature.

Hence, in the magnetic head of the present invention, it is preferable that the zirconia phase as a slider material contain a stabilizer in an amount sufficient to maintain the zirconia phase cubic at room temperature. When the stabilizer is $Y_2O_3$, it is preferable that $Y_2O_3$ be contained in the zirconia phase in an amount of 5 to 20 mole % and the remainder be substantially $ZrO_2$. However, the co-presence of MgO and CaO causes no problem.

Presence of the above stabilizers in an excessive amount causes segregation of $ZrO_2$—$Y_2O_3$ compounds such as $Y_4Zr_3O_{12}$ in cubic zirconia resulting in reduction of slidability and strength. For this reason, it is not advisable to add $Y_2O_3$ in an amount exceeding 20 mole %. As the amount of a stabilizer added becomes smaller, as mentioned above, zirconia comes to contain t phase and m phase. When m-phase zirconia appears on cooling to room temperature, it leads to a volume expansion. The appearance of m-phase, due to heating up to several hundreds degree centigrade and subsequent cooling at the time of film and pattern deposition to substrate, may cause warping of substrate and pattern deviation. For this reason, the lower limit of stabilizer addition amount is set at about 5 mole % to obtain a stabilized zirconia phase. It is preferable that the amount of $Y_2O_3$ added be 5 mole % or above but as small as possible. More preferably, the amount is about 5 to about 10 mole %.

When the surface of a sintered zirconia of the present invention is subjected to mirror polishing followed by X-ray diffractometry, no peak of monoclinic crystal is seen and only the peak of tetragonal or cubic crystal is observed.

On the other hand, when a powder obtained by subjecting the above sintered zirconia to long hour grinding is tested for X-ray diffractometry, a peak of monoclinic crystal is observed when the amount of $Y_2O_3$ added is 7 mole % or below. This is due to that the residual tetragonal crystal in sintered zirconia is converted to a monoclinic crystal by a stress-induced transformation at the time of grinding. On an assumption that the tetragonal crystal is completely converted to a monoclinic crystal, the content of tetragonal crystal in original sintered zirconia is calculated from the following equation based on the integration value of the intensity of X-ray diffraction for sintered zirconia powder.

Content of tetragonal crystal

$$= \frac{I_m(111) + I_m(11\bar{1})}{I_c(111) + I_m(111) + I_m(11\bar{1})} \times 100 \ (wt \ \%)$$

$I_m(111)$ = Integration value of intensity of monoclinic crystal (111) peak.
$I_m(11\bar{1})$ = Integration value of intensity of monoclinic crystal (11$\bar{1}$) peak
$I_c(111)$ = Integration value of intensity of cubic crystal (111) peak

A high content of residual tetragonal crystal in sintered zirconia increases the strength of zirconia but makes zirconia unstable; that is, as mentioned above, it causes a transformation of zirconia during heating and cooling for the production of thin film head and may cause deformation of substrate. Hence, it becomes essential that the content of tetragonal crystal in sintered zirconia be controlled so as to be 5% or less. When the content of tetragonal crystal is in this range, the most part of sintered body is a cubic crystal having an average particle diameter of 5 to 10 µm, and a tetragonal crystal exists only slightly among the particles of cubic crystal as very fine particles having diameters of 0.5 µm or smaller, and there occurs no transformation upon heat treatment.

Crystal grain particles of zirconia phase have diameters preferably of 12 µm or smaller, more preferably 10 µm or smaller. Diameters of 12 µm or smaller improve machinability and make the size of chipping smaller.

It is preferable that the substrate material used in the magnetic head of the present invention have a relative density (compared with a theoretical density) of 99% or larger. With this density, the substrate material has little pores. When the substrate material contains only dispersed alumina in zirconia, the relative density is 99.5% or larger. Such a high density allows zirconia ceramic to have excellent slidability.

When a zirconia ceramic is used for a slider, its triboelectrification due to CSS or sliding against disk is slight. This is one of the merits with zirconia ceramics containing carbide particles such as TiC. Zirconia ceramics have low electrical resistances only when they contain a large amount of carbide. However, it was found that even a zirconia ceramic whose carbide content is not so high and whose electrical resistance is relatively high is slight in electrification by friction. The reason is not clear but it is thought to be due to that difference in triboelectrical series between the above zirconia ceramic and a protective film on the surface of magnetic disk is small.

In production of the zirconia ceramic of the present invention, a $ZrO_2$ fine powder, a $Y_2O_3$ powder, a powder of a carbide of an element selected from Groups IVa, Va and VIa (e.g. TiC, ZrC, HfC, VC, NbC, TaC or

WC) and an $Al_2O_3$ powder are thoroughly mixed in a predetermined proportion and then dried. A small amount of binder is added thereto and the whole mixture is granulated. The granules are preformed into a green body by the use of a press having a cavity of desired shape. The green body is hot-pressed at a temperature of 1,400° to 1,600°C in vacuum to obtain a zirconia ceramic as a sintered body. Instead of the hot-pressing, a hot isostatic press may be applied to obtain high density material after pressureless sintering.

The temperature used in the above hot pressing determines the quality of zirconia ceramic obtained. A temperature of 1,400°C or above is necessary for assuring the relative density of zirconia ceramic of 99% or above. A temperature above 1,600°C induces marked grain growth of crystal particles of stabilized zirconia, therefore, hot pressing should be conducted at a temperature not exceeding 1,600°C.

The zirconia ceramic obtained by hot pressing is cut into the form of magnetic head slider by the use of a diamond blade. The cut piece is given a finish treatment by the use of a grinder or the like. To the resulting slider are fixed a magnetic core, a signal coil and an insulating film to obtain a magnet head. For the insulating film, an $Al_2O_3$ thin film having a thickness of several tens μm produced by sputtering is used.

As described above, the magnetic head of the present invention is excellent in slidability and wear resistance against magnetic disk because it uses a non-magnetic substrate of zirconia ceramic. Further, having a high density and little pores, the magnetic head is superior in CSS resistance property. Furthermore, being slight in triboelectrification by friction, it is suitable as a magnetic head for high density recording. In addition, having good machinability, it can be subjected to fine machining.

The zirconia ceramic used in the present invention will be specifically explained below.

### Example 1

A $ZrO_2$ fine powder of 0.03 μm average particle diameter, a $Y_2O_3$ powder, powders of carbides of typical elements of Groups IVa, Va and VIa (TiC, ZnC, HfC, NbC, TaC and WC) and an $Al_2O_3$ powder were mixed in various proportions shown in Table 1, for 24 hr in an alumina ball mill, using water as suspending medium. Each resulting suspension was dried. Thereto was added an 10% PVA solution and the mixture was granulated by a grinding mixer. The resulting granules were preformed into a green body of 80 mm diameter and 6 to 7 mm thickness at a pressure of 1,000 kg/cm². The green body was hot-pressed in vacuum under conditions of 1,450°C, 300 kg/cm² and 1 hr. For the resulting sintered body, various properties were measured. Relative density was obtained by dividing mass by difference between the mass and the weight measured in water and, then, dividing the value by a theoretical density. Bending strength was measured by cutting a sintered body with a diamond blade into a test piece of 4 mm × 3 mm × 35 mm and subjecting it to JIS four point bending test. Pore observation and Vickers hardness measurement (200 g load) were conducted by applying mirror polishing to respective test pieces. Electrical resistance was measured by using a test piece of 1 cm³ and employing Van der Pauw method which is a kind of four point probe method. When the electrical resistance was too high, both sides of the test piece were coated with a silver paste and then an insulation resistance was measured. Wear amount was measured by a wear test. It was shown relative to the wear amount of zirconia taken as 100. Machinability was rated based on the extent of chipping at the edges formed by the lapped surface and the cut surface when a mirror-polished test piece was cut by a diamond blade to form a groove. Sliding characteristic was rated by cutting a sintered body into a shape of actual slider with a thin film magnetic head and operating the head with a magnetic disk. The results of all these measurements are shown in Table 1.

As the slidability, CSS resistance property was measured. Each sintered body was machined into a shape of slider described in Japanese Patent Laid open No. 55—163665 and a thin layer magnetic transducer with an amorphous magnetic core of 87 atomic % Co—8 atomic % Zr—5 atomic % Nb was assembled on the trailing side of the slider. As the magnetic disk for the test, a 5 1/4 inch disk with sputtered γ-$Fe_2O_3$ magnetic medium coated with carbon over-coat was used. On the test, the disk rotations and stops were repeated. One cycle of the rotation included the steps of increasing rotation till 3,600 rpm for 20 sec by switching on electricity, keeping the rotation for 5 sec, reducing the rotation speed till zero by cutting off electricity and then keeping stop for 15 sec. After many cycle times, life of the magnetic head and the disk was determined at the time when the output of electro-magnetic transduction was reduced by 10%. From Tables 1 through 3, on the sliding characteristic column, the marks "round", "triangle" and "cross" mean that each magnetic head showed durability of more than 30,000 times, of less than 30,000 but more than 20,000 and of less than 20,000, respectively.

In Table 1, Nos. 1 to 8 each are a zirconia ceramic wherein $Al_2O_3$ and a carbide are added. Nos. 9 and 10 each are a zirconia ceramic wherein only $Al_2O_3$ is added. All of Nos. 1 to 10 contain $Al_2O_3$ as an sintering aid in an amount of 2% by weight. Incidentally, No. 9 contains about 40% of tetragonal zirconia, and Nos. 1 to 8 and 10 contain 5% or less of tetragonal zirconia. No. 11, $Al_2O_3$— 30wt% TiC ceramic, contained MgO as an sintering aid in an amount of 0.5% by weight, which content is not specified in Table 1, and was obtained by hot pressing at 1,650°C.

As for relative density, all samples except No. 11 ($Al_2O_3$—TiC) showed densities of 99% or above. In pore observation for mirror-polished surface, pores were hardly observed, which satisfied one of basic requirements for substrate of "no Pores". This excellency in pore will be due to that $ZrO_2$ as a matrix material, compared with $Al_2O_3$, has better sinterability and moreover was sintered under pressure.

As for Vickers hardness, $ZrO_2$ was inferior to $Al_2O_3$—TiC. However, addition of a carbide to zirconia

increased the $H_v$ of zirconia by about 100 to 200, to 1,400 to 1,550. The carbide addition also improved the wear resistance of zirconia. Bending strength is greatly influenced by the strength of matrix. Therefore, compared with No. 9 containing a large amount of residual tetragonal crystal, zirconia as well as zirconia-carbide systems had lower bending strengths, however, these strengths are sufficient as a strength actually required for substrate. In electrical resistance, there was a large variation among zirconia samples each containing 30% by volume of a carbide, depending upon the average grain size and the grain size distribution of carbide particles. However, their electroconductivities were greatly improved compared with that of matrix $ZrO_2$ and are desirable viewed from prevention of triboelectrification.

Chipping at the time of grooving was improved in amount and size by addition of a carbide. Thus, machinability was improved by addition of a carbide. As for sliding characteristic, $Al_2O_3$—TiC was not sufficient as a substrate material because it impaired a disk in a short time. Stabilized zirconias each containing a sufficient amount of $Y_2O_3$ withstood the rotation of disk for a long time and showed good slidability. However, No. 9 zirconia containing a large amount of tetragonal crystal was a little poor in slidability.

Table 1

| No. | Matrix | | Carbide (vol%) | Alumina (wt%) | Relative Density (%) | Vickers hardness | Bending strength $(kg/mm^2)$ | Specific resistance $(\Omega cm)$ | Relative wear amount | Machinability | Sliding characteristic |
|---|---|---|---|---|---|---|---|---|---|---|---|
| | $ZrO_2$ (mol%) | $Y_2O_3$ (mol%) | | | | | | | | | |
| 1 | 94 | 6 | ZrC30 | 2 | 99.9 | 1450 | 39 | $4 \times 10^1$ | 65 | o | o |
| 2 | 94 | 6 | HfC30 | 2 | 99.0 | 1470 | 35 | $5 \times 10^1$ | 65 | o | o |
| 3 | 94 | 6 | VC 30 | 2 | 99.0 | 1510 | 40 | $2 \times 10^{-2}$ | 70 | o | o |
| 4 | 94 | 6 | NbC30 | 2 | 99.7 | 1470 | 37 | $1 \times 10^{-3}$ | 60 | o | o |
| 5 | 94 | 6 | TaC30 | 2 | 99.1 | 1400 | 43 | $3 \times 10^{-3}$ | 70 | o | o |
| 6 | 94 | 6 | WC 30 | 2 | 99.0 | 1470 | 38 | $6 \times 10^{-4}$ | 65 | o | o |
| 7 | 94 | 6 | TiC10 | 2 | 99.7 | 1510 | 40 | $\sim 10^{10}$ | 85 | o | o |
| 8 | 94 | 6 | TiC30 | 2 | 99.5 | 1550 | 38 | $7 \times 10^{-3}$ | 60 | o | o |
| 9 | 97 | 3 | – | 2 | 99.5 | 1330 | 61 | $\sim 10^{12}$ | 100 | x | Δ |
| 10 | 94 | 6 | – | 2 | 99.8 | 1290 | 36 | $\sim 10^{12}$ | 100 | Δ | o |
| 11 | $Al_2O_3$ | | TiC30 wt% | | 98.5 | 1800 | 50 | $2 \times 10^{-2}$ | 40 | o | x |

EP 0 137 134 B1

### Example 2

Various zirconia ceramics each having a composition shown in Table 2 were prepared in the same condition as in Example 1. Each zirconia ceramic was machined and mirror-polished to obtain a wafer of 3 in. diameter. This wafer sample was tested for crystal grain size, anti-chipping property, cutting resistance, condition of cut surface and sliding characteristic.

Anti-chipping property was rated based on the size of chipping (maximum chipping depth in Table 2) formed at the edges at the time of grooving by a dicing machine as well as on the extent of chipping of alumina film. An alumina film was formed on a ceramic substrate by sputtering in a thickness of about 40 μm. The substrate was subjected to grooving by a dicing machine; thereby both the ceramic and the alumina film were chipped; and the width of this chipping of alumina film was used as the extent of chipping of alumina film.

Cutting resistance was tested by conducting cutting with an outside circumferential slicing machine and measuring a stress applied to the slicing machine by the use of a piezoelectric element.

Sliding characteristic was rated by placing a zirconia ceramic on a rotating disk and allowing the ceramic to making a CSS movement.

In Nos. 12 and 14 wherein neither $Al_2O_3$ nor TiC was added, cutting resistance was very large and condition of cut surface was poor. In No. 12 having small crystal grain particles, maximum chipping depth was small, while it was much larger in No. 14 containing a larger amount of $Y_2O_3$ and having large cubic crystal grain particles. In Nos. 15 and 16 wherein $Al_2O_3$ and TiC were added respectively, crystal grain particles were slightly smaller than in No. 14 and maximum chipping depth was reduced a little. On the other hand, in No. 13 and Nos. 17 to 25 wherein both TiC and $Al_2O_3$ were added, maximum chipping depth was reduced to about 1/3 of that of No. 14; cutting resistance was small; condition of cut surface was good and a slicing wheel showed little change even after machining of 90 sliders; and chipping of alumina film was very small.

No. 25 contained a very large amount (40% by volume) of TiC. In this sample, maximum chipping depth and cutting resistance were both small, however, sliding characteristic was poor, that is, CSS life was short.

As is obvious from the above experimental results, zirconia ceramics are excellent in sliding characteristic. However, addition of carbide to a zirconia in an amount of 30% by volume reduces sliding characteristic a little. Nevertheless, the reduced sliding characteristic is still superior to that of an $Al_2O_3$—TiC system.

Zirconia ceramics wherein a carbide and $Al_2O_3$ are dispersed are excellent in wear resistance.

In cubic zirconia, by dispersing $Al_2O_3$ and TiC therein, crystal particle diameters and maximum chipping depth become smaller, whereby machinability is improved.

Table 2

| No. | Major component | | Additive | | Crystal particle diameter (μm) | Maximum chipping depth (μm) | Alumina film chipping (μm) | Cutting resistance (gf) | Condition of cut surface | Sliding characteristic |
|---|---|---|---|---|---|---|---|---|---|---|
| | $ZrO_2$ (mol%) | $Y_2O_3$ (mol%) | $Al_2O_3$ (vol%) | TiC (vol%) | | | | | | |
| 12 | 95 | 5 | – | – | 2 – 4 | 5 – 8 | 5 – 8 | 900 | X | O |
| 13 | 94 | 5 | 5 | 5 | 1 – 3 | 3 – 5 | 4 – 6 | 200 | O | O |
| 14 | 91 | 9 | – | – | 10 – 15 | 18 – 20 | 12 – 15 | 210 | Δ | O |
| 15 | 91 | 9 | 5 | – | 7 – 10 | 10 – 12 | 10 – 12 | 200 | Δ | O |
| 16 | 91 | 9 | – | 5 | 8 – 12 | 13 – 16 | 10 – 12 | 180 | Δ | O |
| 17 | 91 | 9 | 2 | 2 | 5 – 10 | 7 – 9 | 7 – 10 | 150 | O | O |
| 18 | 91 | 9 | 2 | 5 | 5 – 10 | 5 – 7 | 5 – 8 | 180 | O | O |
| 19 | 91 | 9 | 2 | 10 | 3 – 7 | 5 – 6 | 5 – 8 | 120 | O | O |
| 20 | 91 | 9 | 5 | 2 | 5 – 10 | 5 – 6 | 6 – 9 | 140 | O | O |
| 21 | 91 | 9 | 5 | 5 | 3 – 7 | 3 – 4 | 4 – 6 | 100 | O | O |
| 22 | 91 | 9 | 5 | 10 | 3 – 7 | 3 – 5 | 4 – 6 | 100 | O | O |
| 23 | 91 | 9 | 10 | 5 | 3 – 5 | 3 – 4 | 5 – 7 | 110 | O | O |
| 24 | 91 | 9 | 10 | 10 | 3 – 5 | 3 – 4 | 5 – 11 | 100 | O | Δ |
| 25 | 91 | 9 | 10 | 40 | 3 – 5 | 3 – 4 | 5 – 7 | 100 | O | Δ |

EP 0 137 134 B1

### Example 3

One hundred grams in total of $ZrO_2$ fine particles having an average particle diameter of 0.03 μm and a $Y_2O_3$ powder was mixed in various compositions as shown in Table 3. Thereto were added 2 g of $Al_2O_3$ as well as pure water as suspending liquid. The whole mixture was mixed for 24 hr in an alumina ball mill.

The suspension was dried and granulated. The resulting granules were preformed into a green body of 80 mm in diameter and 6 to 7 mm in thickness at a pressure of 1,000 kg/cm². The green body was hot-pressed in vacuum under conditions of 1,450°C, 300 kg/cm² and 1 hr to obtain a sintered body. Based on the specific gravity of $ZrO_2$ of 5.9 and that of $Al_2O_3$ of 3.99, the amount of $Al_2O_3$ is calculated to 2.9% by volume.

The sintered body was cut into a test piece with a diamond blade. At this time, the cutting resistance was smaller than that of an $Al_2O_3$—TiC substrate and decreased as the amount of $Y_2O_3$ increased. Also, chipping hardly occurred at the edges of the cut surface and machinability was good.

For each test piece obtained above, there were measured density, Vickers hardness, bending strength and sliding characteristic, in the same manner as in Example 1. Thermal expansion coefficient was measured by using a test piece of 3 mm × 3 mm × 20 mm. Average thermal expansion coefficient in a temperature range of room temperature to 400°C is shown in Table 3.

Thermal stability was rated as to whether a thermal expansion-shrinkage curve of a test piece showed a linear change and returned to the original point when the piece was subjected to heating and cooling in a temperature range of room temperature to 800°C.

The results of the above measurements are shown in Table 3.

In Table 3, samples according to the present invention are Nos. 28 to 34, and Nos. 26 and 27 are for comparison. In all samples, relative density exceeded 99.5%. On the mirror-polished surfaces, there were places showing the scattering of $Al_2O_3$ fine particles but pores were hardly observed whereby an essential requirement of "no surface pores" for thin film head substrate was met. Vickers hardness showed values ranging from 1,200 to 1,300 independently of the amount of $Y_2O_3$. Bending strength decreased as the amount of $Y_2O_3$ increased. This corresponded to the decrease of the content of residual tetragonal crystal with the increase of the amount of $Y_2O_3$. Also, thermal expansion coefficient tended to decrease as the amount of $Y_2O_3$ increased. Compared with the thermal expansion coefficient of $Al_2O_3$ insulation film (80 × $10^{-7}$°C$^{-1}$), those of Nos. 28 to 34 (90 to 97 × $10^{-7}$°C$^{-1}$) were slightly larger but cause no practical problem. In Nos. 26 and 27 each containing a large amount of tetragonal crystal, thermal expansion curve showed an almost linear increase during temperature elevation but showed expansion at 400° to 600°C during cooling, which indicated that thermal stabilities of these samples were poor.

Nos. 28 to 34 showed almost linear expansion and shrinkage, which indicated that these samples were thermally stable.

In sliding characteristic, an $Al_2O_3$—TiC substrate impaired a disk in a short time, while stabilized zirconias assured a long time use with disk. Sliding characteristic was better in zirconias of higher $Y_2O_3$ content.

Table 3

| No. | $ZrO_2$ (mol%) | $Y_2O_3$ (mol%) | Bulk density $(g/cm^3)$ | Vickers hardness | Bending strength $(kg/mm^2)$ | Thermal expansion coefficient $(x10^{-7} \cdot C^{-1})$ | Content of tetragonal crystal | Thermal stability | Sliding charac- teristic |
|---|---|---|---|---|---|---|---|---|---|
| 26 | 97 | 3 | 6.00 | 1330 | 61 | 105 | 41 | X | Δ |
| 27 | 96 | 4 | 5.98 | 1260 | 56 | 102 | 22 | X | Δ |
| 28 | 95 | 5 | 5.96 | 1260 | 44 | 97 | 5 | Δ | Δ |
| 29 | 94 | 6 | 5.94 | 1290 | 36 | 94 | 3.2 | O | O |
| 30 | 93 | 7 | 5.90 | 1260 | 31 | 95 | 1.7 | O | O |
| 31 | 92 | 8 | 5.88 | 1260 | 27 | 93 | 0 | O | O |
| 32 | 91 | 9 | 5.85 | 1300 | 25 | 91 | 0 | O | O |
| 33 | 90 | 10 | 5.81 | 1210 | 27 | 90 | 0 | O | O |
| 34 | 88 | 12 | 5.86 | 1250 | 15 | 91 | 0 | O | O |

EP 0 137 134 B1

# EP 0 137 134 B1

**Claims**

1. A magnetic head comprising a slider body formed of a non-magnetic zirconia ceramics substrate having good slidability and an electro-magnetic transducer disposed on the substrate and having a magnetic piece and a signal winding, the zirconia ceramics comprising a predominantly cubic zirconia matrix with $Y_2O_3$ as a stabilizer, characterized in that the zirconia matrix contains five to 20 mol%, preferably 5 to 10 mol%, of $Y_2O_3$ and 0.5 to 30 vol% of fine carbide particles dispersed in the matrix, the carbide being a carbide of at least one metal selected from groups IVa, Va, and VIa of the periodic table, preferably titanium.

2. The magnetic head of claim 1, wherein the zirconia matrix further contains 0.5 to 30 vol% of fine alumina particles dispersed in the matrix.

3. The magnetic head of claim 2, wherein fine carbide particles and fine alumina particles are present each in an amount of 1 to 10 vol %.

4. The magnetic head of any of claims 1 to 3, wherein an insulating layer is interposed between the substrate and the electro-magnetic transducer.

**Patentansprüche**

1. Magnetkopf, umfassend einen aus einem nicht-magnetischen Zirkonoxid-Keramiksubstrat mit guter Gleitfähigkeit gebildeten Gleitkörper und einen auf dem Substrat angeordneten elektromagnetischen Wandler mit einem magnetischen Teil und einer Signalwicklung, wobei die Zirkonoxidkeramik eine vorwiegend kubische Zirkonoxidmatrix mit $Y_2O_3$ als Stabilisator enthält, dadurch gekennzeichnet, daß die Zirkonoxidmatrix 5 bis 20 mol%, vorzugsweise 5 bis 10 mol%, $Y_2O_3$ und 0,5 bis 30 vol% in der Matrix dispergierte feine Carbidteilchen enthält, wobei es sich bei dem Carbid um ein Carbid mindestens eines aus den Gruppen IVa, Va und VIa des Periodensystems ausgewählten Metalls, vorzugsweise des Titans, handelt.

2. Magnetkopf nach Anspruch 1, wobei die Zirkonoxidmatrix ferner 0,5 bis 30 vol% in der Matrix dispergierte feine Aluminiumoxidteilchen enthält.

3. Magnetkopf nach Anspruch 2, wobei feine Carbidteilchen und feine Aluminiumoxidteilchen jeweils in eine Menge von 1 bis 10 vol% vorhanden sind.

4. Magnetkopf nach einem der Ansprüche 1 bis 3, wobei zwischen dem Substrat und dem elektromagnetischen Wandler eine Isolierschicht eingefügt ist.

**Revendications**

1. Tête magnétique comprenant un corps coulissant formé d'un substrat de céramique à base de zircone non magnétique présentant une bonne aptitude au glissement et un transducteur électromagnétique disposé sur le substrat et ayant un élément magnétique ainsi qu'un enroulement de signal, la céramique à base de zircone comprenant une matrice de zircone principalement cubique contenant du $Y_2O_3$ stabilisant, caractérisée en ce que la matrice de zircone contient 5 à 20 moles %, et de préférence de 5 à 10 moles % de $Y_2O_3$, et de 0,5 à 30% en volume de fines particules de carbure dispersées dans la matrice, le carbure étant un carbure d'au moins un métal sélectionné dans les groupes IVa, Va et VIa du tableau périodique des éléments, et de préférence du titane.

2. Tête magnétique selon la revendication 1, la matrice de zircone contient en outre 0,5 à 30% en volume de fines particules d'alumine dispersées dans la matrice.

3. Tête magnétique selon la revendication 2, dans laquelle les fines particules de carbure et les fines particules d'alumine sont chacune présente à raison de 1 à 10% en volume.

4. Tête magnétique selon l'une quelconque des revendications 1 à 3, dans laquelle une couche isolante est interposée entre le substrat et le transducteur électromagnétique.